# EUROPEAN PATENT SPECIFICATION

(11) **EP 1 579 760 B1**
(45) Date of publication and mention of the grant of the patent: **28.10.2009**
(21) Application number: 05075450.6
(22) Date of filing: 24.02.2005
(51) Int. Cl.: A01K 1/00

(54) **A cubicle, a cubicle construction with such a cubicle, a partition for use in such a cubicle and a stable with such a cubicle or cubicle construction**
Ein Alkoven, ein Alkovenaufbau mit einem solchen Alkoven, eine Trennung für Gebrauch in einem solchen Alkoven und ein Stall mit einem solchen Alkoven oder Alkovenaufbau
Une logette, une construction de logette avec une telle logette, une séparation pour l'usage dans une telle logette et une étable avec une telle logette ou construction de logette

(30) Priority: 26.03.2004 NL 1025820
(43) Date of publication of application: 28.09.2005
(73) Proprietor: Lely Enterprises AG, 6300 Zug (CH)
(72) Inventor: Ally, Koen Arseen Jean, 9831 Deurle (BE)
(74) Representative: Corten, Maurice Jean F.M.

(56) References cited:
- BE-A- 1 014 421
- DE-A1- 2 745 522
- DE-B- 1 277 622
- DE-U- 20 203 028
- US-A- 3 986 481

## Description

The invention relates to a cubicle according to the preamble of claim 1.

DE 05 27 45 522 discloses a cubicle with a tying device and a neck crossbar, with a fixed, but height-adjustable carrier pole.

A cubicle is also known from German patent DE-19547372-C2. The cubicle described therein is suitable for bovines and comprises at the two long sides a tube-shaped, straight partition. Said partition is connected in a flexible manner, by means of a spring, to a wall or post. Near the side opposite the entrance side, a long, straight cross beam is fastened to the upper side of several cubicles. Said cross beam serves as a rear partition of the cubicle and also as an extra sideward reinforcement for the cubicles. An animal can only walk into the cubicle until its shoulder comes into contact with the rear partition. Said distance is chosen in such a way that the animal is able to stand completely inside the cubicle, but its excrements will fall outside the cubicle.

A disadvantage of the known cubicle is that it is sensitive to contamination by excrements of the animal. Said contamination may promote diseases and may lead with a lactating animal to an inferior milk quality.

The invention aims at providing an improved cubicle that is less sensitive to contamination by the animal. This is achieved by means of a cubicle according to claim 1. By means of the profile an animal is forced into such a position that a diagonal position of the animal in the cubicle becomes impossible or at any rate uncomfortable for the animal. Especially in case of a diagonal position in the cubicle, the animal will drop excrements in the cubicle, thus causing contamination. The profile may be constituted both by the partition itself and by an additional element that is fastened to the partition.

In particular, the profile is orientated at least partially in the horizontal plane. Such an orientation ensures that an animal, when entering the cubicle, is smoothly guided to the desired position in the cubicle.

It is advantageous if the partition comprises a downwardly extending portion. This prevents an animal that is in a lying position or is going to lie down from taking an oblique position. The downwardly extending portion of the partition is located in particular in the front half of the cubicle. In this part of the cubicle the vulnerable udder is located. In this manner the udder is additionally protected against kicking by an animal that is present in an adjacent cubicle.

In a favourable embodiment, the profile is suitable for orientating the animal in a standing position in the cubicle. The upright (walking) position is the best position for an animal to have itself positioned by the shapes of the cubicle.

In another favourable embodiment, the profile is suitable for orientating the animal in a lying position in the cubicle. Such a construction needs to be less high so that less material is required.

In again another favourable embodiment, the two lateral partitions comprise the profile.

In particular, the profile is bent in the direction of the rear short side.
Such a bent embodiment does not comprise acute angles that are sensitive to accumulation of dirt.

Preferably, the longitudinal centre plane of the cubicle is the plane of symmetry of the cubicle. Such a symmetric embodiment of a cubicle requires less components.

It is advantageous if, in plan view, the profile follows at least partially the contours of the animal. The cubicle is thus adapted as much as possible to the shape of the animal, which enhances the comfort for the animal.

In a favourable embodiment, a partition is at least partially freely movable in height from and into an inoperative position. Such a partition prevents injuries, because it yields in vertical direction. This yielding in vertical direction is in particular important when the animal stands up from a lying position.

In a further favourable embodiment, the lateral partition comprises the rear partition. This makes it possible to produce the two partitions as one single frame.

In a particular embodiment, a lateral partition comprises a bar-shaped leg, the legs of the two lateral partitions of a cubicle being located in the same plane. This enables a construction in which there is created a completely free space below the legs. Said free space makes it possible to dispose a broad mattress that is capable of covering several, adjacent cubicles.

In a further particular embodiment, viewed from the entrance, the lateral partition comprises the left leg of the cubicle and the right leg of a second cubicle that is adjacent on the left. This makes it possible to combine the two legs, which leads to a simple construction.

In a constructively simple embodiment, a partition is designed as one single, bent bar-shaped element.

It is advantageous if, in plan view, the plane extending between the two legs and contiguous to the front side is closed or comprises apertures that are smaller than the leg diameter of the animal for which the box is intended. It occurs that animals, in particular bovines, mount each other. This may cause dangerous situations. The favourable embodiment prevents an animal from getting accidentally entangled with one of its legs between the legs of the adjacent cubicles when the mounting animal leaves the other animal.

In a cubicle according to the invention, for fastening a lateral partition to the support element, the cubicle comprises a hinge and a stop for preventing a downward rotation of the partition. By means of such a construction the lateral partition can also be taken away completely in a simple manner by folding it up. By taking the centre of gravity of the partition into account when placing the hinge, it is possible for the partition to return, only by gravitational force, to its initial position as determined by the stop. In order to prevent a too easy upward rotation about the hinge point, a spring may be disposed, if desired.

In another cubicle according to the invention, for fastening a lateral partition to the support element, the cubicle comprises a leaf spring with a horizontally orientated leaf, a coiled spring having at least one coil in the vertical plane, or a rubber torsion spring. Such constructions are insensitive to blockage by dirt.

In again another embodiment of the cubicle according to the invention, the profile comprises a shoulder delimitation for limiting the movement of the shoulder or neck of the animal in a normal position of rest of the animal in the cubicle. By a normal position of rest is meant a position in which the whole animal is located in the cubicle, and in which the animal can both be lying and standing.

It has been found that the cubicle is advantageously dimensioned if the height of the shoulder delimitation above the floor of the cubicle is at a level between half the shoulder height and the shoulder height of the animal for which the cubicle is intended, and/or the free space between the two legs of the cubicle amounts to between 80 cm and 100 cm, and/or the distance between the centre lines of two adjacent cubicles amounts to between 110 cm and 130 cm.

In another favourable embodiment, the rear partition is made of flexible material. This embodiment enables movability in height without an additional mechanical construction being required. This means that this embodiment can be produced cheaply. Preferably, the shoulder delimitation is ribbon-shaped. Such a shoulder delimitation is relatively cheap and capable of being fastened easily in a simple manner in an existing conventional cubicle.

It is advantageous if the rear partition comprises a bumper that is fastened on the floor of the cubicle for the purpose of impeding the movement of the breast of a lying animal in the direction of the rear short side. A cubicle with such a bumper promotes the positioning of a lying animal parallel to the lateral partitions. Such a bumper may be applied instead of or complementary to a shoulder delimitation.

The invention further relates to a cubicle construction as claimed in claim 16. By applying a support element comprising a horizontal tube which extends along several cubicles, said support element needs to be fastened to the stable only at a few places and thus provides a simple construction with many fastening possibilities.

The invention further relates to a stable with a cubicle according to the invention.

The invention also relates to a partition for use in a cubicle according to the invention.

The invention will be explained hereinafter in further detail with reference to some exemplary embodiments.
Figure 1 shows a plan view of an embodiment of a cubicle not according to the invention with a flexible shoulder delimitation;
Figure 2 shows a plan view of an embodiment of a cubicle according to the invention with bumpers;
Figure 3 shows a side view of an embodiment of a cubicle according to Figure 2, taken along line A;
Figure 4 shows a plan view of an embodiment of a cubicle according to the invention with a leaf spring;
Figure 5 shows a side view of an embodiment of a cubicle according to the invention with a hinge and a stop;
Figure 6 shows a side view of another embodiment of a cubicle according to the invention with a hinge and a stop, and
Figure 7 shows a side view of an embodiment of a cubicle according to the invention with a rubber torsion spring.

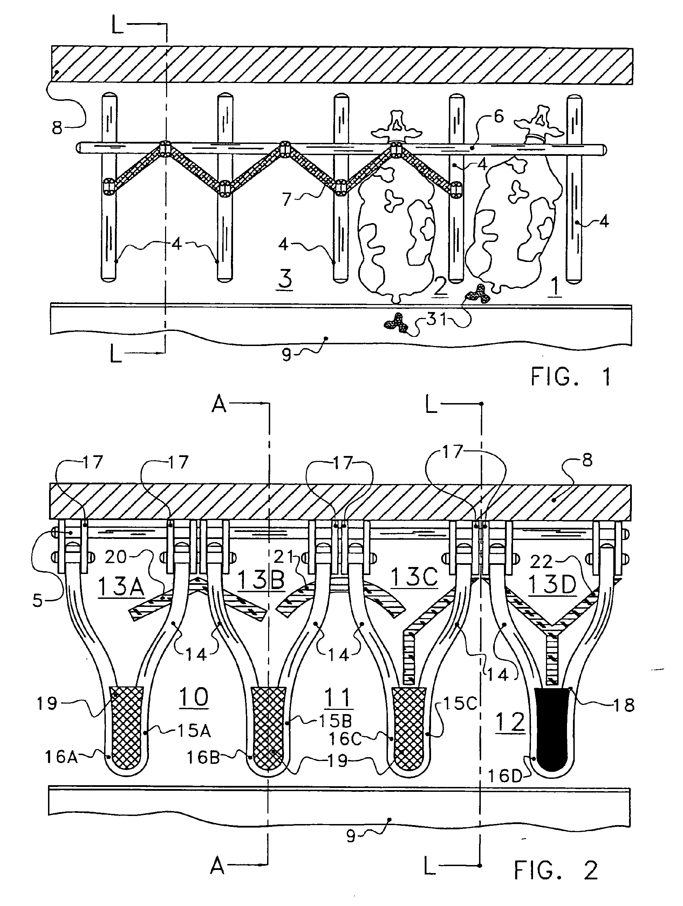

Figure 1 shows a first embodiment but not according to the invention in which a conventional cubicle 1 has been adapted. It shows a cubicle 2, 3 for an animal, in particular a bovine, with a front short side forming the entrance for the animal to the cubicle 2, 3, with lateral partitions 4 extending at the two long sides of the cubicle 2, 3, with a rear partition 7 for limiting the animal's movement at the rear short side of the cubicle 2, 3, and with a support element for fastening the lateral partitions 4, the rear partition 7 comprising a profile which is orientated at least in the horizontal plane and which is suitable for positioning the animal in the cubicle 2, 3 in such a way that the animal is orientated substantially parallel to the longitudinal direction of the cubicle 2, 3. The longitudinal direction of the cubicle 2, 3 is parallel to the longitudinal centre plane L of the cubicle. The profile extends at least partially in the direction of the rear short side and in the direction of the longitudinal centre plane L of the cubicle 2, 3. The profile is ribbon-shaped and made of flexible material and comprises a shoulder delimitation 7 for impeding the movement of the shoulder or neck of the animal in a normal position of rest of the animal in the cubicle 2, 3. The position of rest is the standing position as depicted in cubicle 2.

The shoulder delimitation 7 is at least partially movable in height and is connected to a lateral partition 4. The lateral partition 4 comprises a bar-shaped leg, the legs of the left and right partitions 4 being located in the same horizontal plane. Viewed from the entrance, the left leg of the cubicle 2 comprises the right leg of the cubicle 3 that is adjacent on the left. The cubicle 2 is fastened to a wall 8. The individual cubicles 1, 2, 3 are accessible via the respective entrances from a walking passage 9. Said walking passage 9 consists of a grid floor and comprises a (non-shown) manure slide to remove excrements 31.

The cubicle 1 depicted far right is a so-called conventional cubicle 1 with a straight shoulder delimitation in the form of a shoulder barrier 6 transverse to the lateral partition 4. The position of the animal present in the cubicle 1 is diagonal. This makes it possible for the animal to deposit excrements 31 in the cubicle 1.

The cubicles 2, 3 are adapted conventional cubicles, in which an extra shoulder delimitation 7 in the form of a flexible ribbon is provided. Said ribbon is disposed in a zigzag manner over several cubicles 2, 3, on the original shoulder barrier 6 and the respective lateral partitions 4, and forms the profile for positioning the animal in longitudinal direction. Owing to the fact that the front angles of the cubicles 2, 3 are truncated by the ribbon, an animal will no longer be able to take a diagonal position in the cubicles 2, 3. The length of the cubicles 2, 3, i.e. the distance in a straight line from the entrance to the rear point of the shoulder delimitation 7, is chosen in such a way that, when an (average) animal is located completely in the cubicle 2, 3, it extends with its rear side to above the walking passage 9. This means that excrements 31 will fall on the walking passage 9. The fastening to the shoulder barrier 6 or to the lateral partition 4 can be made in a sliding manner by passing the ribbon through eyes, but can also be made in a way in which the ribbon is prevented from sliding. The depicted lateral partitions 4 are rigidly fastened to the stable via the wall 8, but lateral partitions 4 that are movable in height are also possible. It is obvious that the ribbon may also be fastened in other ways than to the shoulder barrier 6, such as for example to a cable or rope put under tension.

Figure 2 shows a second embodiment of a cubicle 10, 11, 12 for an animal, in particular a bovine, with a front short side forming the entrance for the animal to the cubicle 10, 11, 12, with lateral partitions 13A, 13B, 13C, 13D, extending at the two long sides of the cubicle 10, 11, 12, with a rear partition for limiting the animal's movement at the rear short side of the cubicle, and with a support element 5 for fastening the lateral partition 13A, 13B, 13C, 13D, characterized in that at least one partition 13A, 13B, 13C, 13D comprises a profile which is orientated at least in the horizontal plane and which is suitable for positioning the animal in the cubicle 10, 11, 12 in such a way that the animal is orientated substantially parallel to the longitudinal direction of the cubicle 10, 11, 12. The two lateral partitions 13A, 13B, 13C, 13D of a cubicle 10, 11, 12 comprise the profile. The profile extends at least partially in the direction of the rear short side and in the direction of the longitudinal centre plane L of the cubicle 10, 11, 12. Said longitudinal centre plane L is also the plane of symmetry of the cubicle 10, 11, 12. In plan view, the profile follows at least partially the contours of the animal and the profile is suitable for orientating the animal in standing position in the box 10, 11, 12.

The lateral partitions 13A, 13B, 13C, 13D are at least partially freely movable in height and comprise a rear partition 14. The lateral partition 13A, 13B, 13C, 13D comprises a bar-shaped leg 15A, 15B, 15C, 16A, 16B, 16C, 16D, the legs 15A, 15B, 15C, 16A, 16B, 16C, 16D of the lateral partitions 13A, 13B, 13C, 13D being located in the same horizontal plane. Viewed from the entrance, a lateral partition 13A, 13B, 13C, 13D comprises the left leg 15A, 15B, 15C of the cubicle and the right leg 16B, 16C, 16D of the cubicle that is adjacent on the left. In this case, a partition 13A, 13B, 13C, 13D is designed as one single, bent bar-shaped element. Figure 2 shows four of such elements in a cubicle construction. A tube that is fastened to the wall 8 serves as a support element 5 for said elements. For fastening a partition 13A, 13B, 13C, 13D to the support element, the cubicle 10, 11, 12 comprises a coiled spring 17 having one coil in the vertical plane. Each leg 15A, 15B, 15C, 16B, 16C, 16D is connected by means of its own coiled spring 17 to the support element 5. Owing to the fact that the fastening points of the legs 15A, 15B, 15C, 16B, 16C, 16D are remote from each other, there is created a robust construction which is capable of absorbing easily lateral forces. In particular with cows, these forces can be considerable.

The functioning of this embodiment is analogous to the embodiment described with reference to Figure 1. In comparison with the embodiment of Figure 1, the entire lateral partition 13A, 13B, 13C, 13D is additionally capable of moving in height. This means that an animal standing up from a lying position has more freedom of movement. This enhances the comfort for the animal, in particular if the animal has walking problems. Besides, there is created more room for lying, because animals are able to lie partially under the lateral partition 13A, 13B, 13C, 13D.

In a non-shown favourable embodiment, the lateral partition makes an angle with the horizontal plane in such a way that at the front side of the cubicle the distance from the lateral partition to the floor of the cubicle is smaller than at the rear side. This angle is preferably approximately 25°.

In plan view, the plane extending between the two legs 15A, 15B, 15C, 16A, 16B, 16C, 16D and contiguous to the front side is closed. This is achieved in a simple manner in that a closed plate 18 is fastened on the front part of the partition, as shown with the lateral partition 13D. Such a closed plane has the advantage that an animal is prevented from getting jammed with a leg between the legs of the element 13D. The same advantage is also achieved by means of a grid 19 instead of a closed plate 18, as shown with the other lateral partitions 13A, 13B and 13C.

As an extra characteristic, on the floor of each cubicle 10, 11, 12 there is fastened a profile according to the invention in the form of a bumper 20, 21, 22 for holding up the breast of a lying animal in the direction of the rear short side. In this case, the rear partition of the cubicle 10, 11, 12 also comprises said bumper 20, 21, 22 and is suitable for orientating the animal in a lying position in the cubicle 10, 11, 12. The bumper 20, 21, 22 is made of flexible material, such as solid rubber, so that the animal cannot get injured. Various variants are depicted. The far right variant 22 comprises a Y-shaped profile and extends partially parallel to the longitudinal direction of the cubicle 10, 11, 12. The bumper 21 of the middle cubicle 11 is bent in the direction of the rear short side. Such a bumper 21 can be made in a simple manner on the basis of an old vehicle tyre. An additional advantage is that said bent bumper 21 has no angles in which dirt can accumulate. The bumper 20 depicted far left differs from the bumper 21 of the middle cubicle 11 in that it has a pointed front side. Owing to the fact that the bumper 20, 21, 22 extends further forwards at the lateral sides of the cubicle 10, 11, 12, an animal will not be able to lie down in a diagonal position in the cubicle 10, 11, 12 without lying partially on the bumper 20, 21, 22. Because this is not comfortable for the animal, the animal will lie down parallel to the longitudinal direction of the cubicle 10, 11, 12.

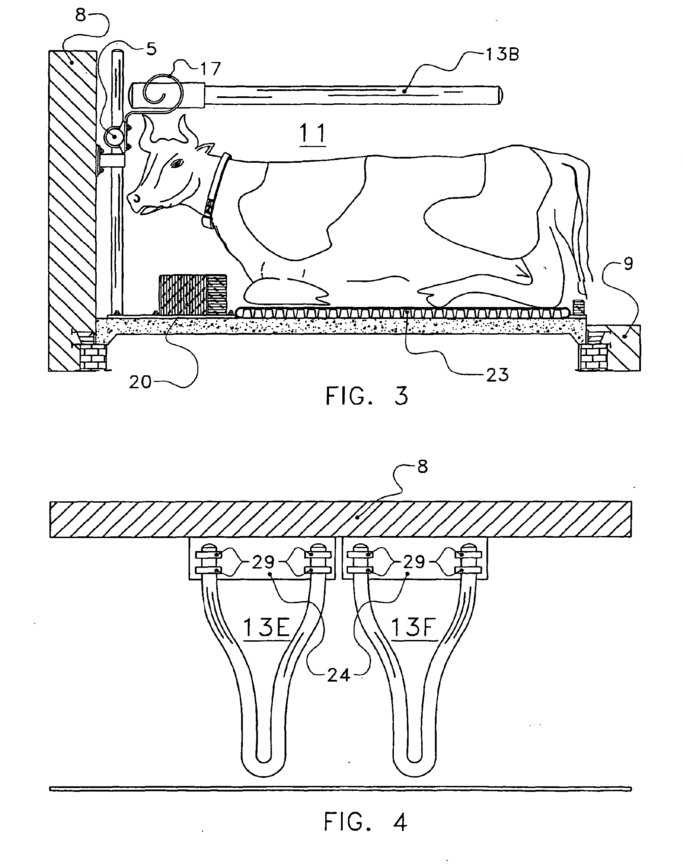

Figure 3 shows a side view of the cubicle 11 of Figure 2 along line A. The floor of the cubicle 11 is provided with a mattress 23 of a known type. Because the lateral partitions 13A, 13B, 13C, 13D are fastened to the support element at the rear side to the stable, the whole floor is free. This makes it possible to cover the floor over several cubicles by means of one single, long, continuous mattress 23. Such a cover for cubicles 10, 11, 12 is relatively cheap. The walking passage 9 is arranged at a lower level in a known manner in order to prevent contamination of the cubicle 10, 11, 12 from the walking passage 9. The partitions 13A, 13B, 13C, 13D are fastened to a support element comprising a horizontal tube 5 which extends along several cubicles 10, 11, 12. For fastening a partition 13A, 13B, 13C, 13D to the support element 5, the cubicle 1 comprises a coiled spring 17 having one coil in the vertical plane. For a better flexibility, several coils are possible as well. In a non-shown embodiment, the coiled spring 17 is fastened directly to the wall or to an upright post.

Figure 4 shows a variant of fastening a lateral partition 13E, 13F to the support element, the cubicle 1 comprising a leaf spring 24 with a horizontally orientated leaf. In this case, the two ends of the bar-shaped element constituting the lateral partition 13E, 13F are fastened via brackets 29 to the upper side of the leaf of the leaf spring 24. A wall 8 then serves as a support element to which the leaf is screwed directly. In a non-shown embodiment, the leaf is fastened to a horizontally orientated side of a square, case-shaped support element.

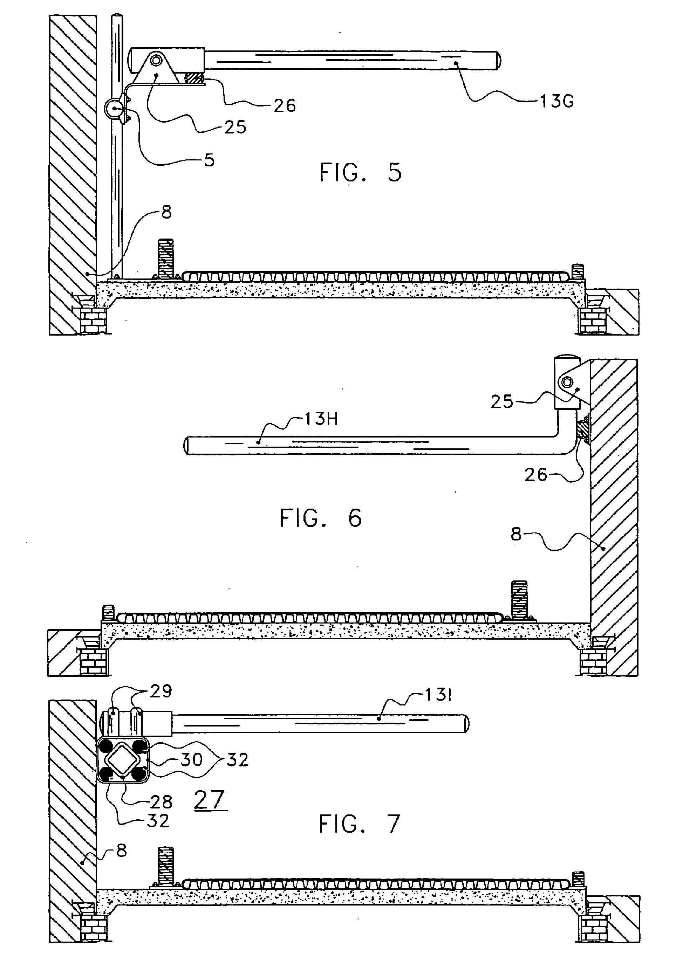

Figure 5 shows another variant of fastening a lateral partition 13G to the support element 5, the cubicle comprising a hinge 25 and a stop 26 for preventing a downward rotation of the partition 13G. In this cubicle, the entire lateral partition 13G is capable of moving freely in vertical direction about a horizontal axis. When the pushing force of the animal has ceased, the lateral partition 13G will return by gravitational force to its initial inoperative position against the stop 26. In order to reinforce this effect, the partition 13G has been made heavier by filling it with concrete. In a non-shown embodiment, the same effect is obtained by means of a spring which makes the partition return to its inoperative position. On behalf of an absorbing effect, the stop 26 is designed as a rubber projection. In the embodiment shown, the stop 26 is fastened to the lower side in front of the hinge point (viewed from the entrance side of the cubicle). In a non-shown embodiment, the stop 26 is fastened to the upper side of the element 13G and behind the hinge point. This has the advantage that the animal can come less easily in the vicinity of the stop 26, which prevents possible injuries caused by the stop.

In Figure 6, the hinge 25 is disposed at a higher level and the legs of the lateral partition 13H are bent upwardly near the support element. In this case, a wall 8 serves as a support element for the hinge 25. Furthermore, a rubber stop 26 is disposed on the wall 8. This cubicle is robust and can be produced cheaply. A further additional advantage is that the hinge 25 is out of reach of the animal.

In a non-shown variant, analogous to that of Figure 6, the bar-shaped legs near the support element 8 are bent downwards and the hinge 25 is located between the floor of the cubicle and the plane of the legs of the lateral partitions.

The embodiments of Figures 5 and 6 are designed in such a way that the partitions 13G, 13H are rotatable as a whole about their respective hinge points into a vertical position. Placing the partitions 13G, 13H in this position makes the cleaning of the cubicles easier. In order to keep the partitions 13G, 13H in the vertical position, (non-shown) clips are fastened to the support element.

Figure 7 shows another variant of fastening a lateral partition 13l to the support element, the cubicle comprising a rubber torsion spring 27. In this case, the support element is designed as a square beam 28, which is fastened to the wall 8 in a known manner. The partition 131 is fastened by means of brackets 29 to a square case 30 which surrounds the beam 28. Between the outer side of the beam 28 and the inner side of the case 30, there are fastened rubber elements 32. These ensure that the case 30 is capable of rotating to some extent about the beam 28 against the spring force of the rubber material. If desired, analogous to the variant of Figure 5, there may be provided a stop 26.

## Claims

1. A cubicle (10, 11, 12) for an animal, in particular a bovine, with a front short side forming the entrance for the animal to the cubicle (10, 11, 12), with two lateral partitions extending at the two long sides of the cubicle (10, 11, 12), with a rear partition for limiting the animal's movement in the direction of the rear short side of the cubicle (10, 11, 12), and with a support element for fastening the lateral partitions,
wherein the two lateral partitions (14) comprise a profile that is suitable for positioning the animal in the cubicle (10, 11, 12) in such a way that the animal is orientated substantially parallel to the longitudinal direction of the cubicle (10, 11, 12), and each comprise a bar-shaped leg (15A, 15B, 15C, 16A, 16B, 16C) that is bent in the direction of the rear short side,
wherein, viewed from the entrance, a left lateral partition (14) comprises the left leg (15A, 15B, 15C) of the cubicle (10, 11, 12) and the right leg (16A, 16B, 16C) of a second cubicle (10, 11, 12) that is adjacent on the left,
the two legs (15A, 15B, 15C, 16A, 16B, 16C) being designed as one single, bent bar-shaped element (14), **characterized in that** an entire lateral partition (14)
is capable of moving freely in vertical direction about a horizontal axis.

2. A cubicle (10, 11, 12) as claimed in any one of the preceding claims, **characterized in that** the profile is suitable for orientating the animal in a standing position in the cubicle (10, 11, 12).

3. A cubicle (10, 11, 12) as claimed in any one of the preceding claims, **characterized in that** the profile is suitable for orientating the animal in a lying position in the cubicle (10, 11, 12).

4. A cubicle (10, 11, 12) as claimed in any one of the preceding claims, **characterized in that** the profile extends at least partially in the direction of the rear short side and in the direction of the longitudinal centre plane (L) of the cubicle (10, 11, 12).

5. A cubicle (10, 11, 12) as claimed in any one of the preceding claims, **characterized in that** the longitudinal centre plane (L) of the cubicle ( 10, 11, 12) is the plane of symmetry of the cubicle (10, 11, 12).

6. A cubicle (10, 11, 12) as claimed in any one of the preceding claims, **characterized in that,** in plan view, the profile follows at least partially the contours of the animal.

7. A cubicle (10, 11, 12) as claimed in any one of the preceding claims, **characterized in that** a lateral partition (14) comprises the rear partition.

8. A cubicle (10, 11, 12) as claimed in any one preceding claim, **characterized in that,** in plan view, the plane extending between the two legs (15A, 15B, 15C, 16A, 16B, 16C) and contiguous to the front side is closed or comprises apertures that are smaller than the leg diameter of the animal for which the box (10, 11, 12) is intended.

9. A cubicle (10, 11, 12) as claimed in any one of the preceding claims, **characterized in that,** for fastening a lateral partition (13G, 13H) to the support element (5), the cubicle (10, 11, 12) comprises a hinge (25) and a stop (26) for preventing a downward rotation of the partition (13G, 13H).

10. A cubicle (10, 11, 12) as claimed in any one of the preceding claims, **characterized in that,** for fastening a lateral partition (13E, 13F) to the support element (8), the cubicle (10, 11, 12) comprises a leaf spring (24) with a horizontally orientated leaf.

11. A cubicle (10, 11, 12) as claimed in any one of the preceding claims, **characterized in that,** for fastening a lateral partition (13B) to the support element (5), the cubicle (11) comprises a coiled spring (17) having at least one coil in the vertical plane.

12. A cubicle (10, 11, 12) as claimed in any one of the preceding claims, **characterized in that,** for fastening a lateral partition (131) to the support element (28), the cubicle (10, 11, 12) comprises a rubber torsion spring.

13. A cubicle (10, 11, 12) as claimed in any one of the preceding claims, **characterized in that** the profile comprises a shoulder delimitation for limiting the movement of the shoulder or neck of the animal in a normal position of rest of the animal in the cubicle (10, 11, 12).

14. A cubicle (10, 11, 12) as claimed in any one of the preceding claims, **characterized in that** the free space between the two legs (15A, 15B, 15C, 16B, 16C, 16D) amounts to between 80 cm and 100 cm.

15. A cubicle (10, 11, 12) as claimed in any one of the preceding claims, **characterized in that** the rear partition comprises a bumper (20, 21, 22) that is fastened on the floor of the cubicle (10, 11, 12) for the purpose of impeding the movement of the breast of a lying animal in the direction of the rear short side.

16. A cubicle construction with a cubicle (10, 11, 12) as claimed in any one of the preceding claims, **characterized in that** the support element comprises a horizontal tube (5) which extends along several cubicles (10, 11, 12).

17. A stable with a cubicle (10, 11, 12) or cubicle construction as claimed in any one of the preceding claims,

18. A partition as defined in anyone of claims 1 to 15 for use in a cubicle (10, 11, 12) as claimed in any one of claims 1 to 15.

## Patentansprüche

1. Box (10, 11, 12) für ein Tier, insbesondere ein Rind, mit einer kurzen Vorderseite, die den Eingang in die Box (10, 11, 12) für das Tier bildet, mit zwei seitlichen Wänden, die sich an den zwei langen Seiten der Box (10, 11, 12) erstrecken, mit einer Rückwand zum Einschränken der Bewegung des Tiers in Richtung auf die kurze Rückseite der Box (10, 11, 12), und mit einem Tragelement zum Befestigen der seitlichen Wände,
wobei die zwei seitlichen Wände (14) ein Profil aufweisen, das zum Positionieren des Tiers derart in der Box (10, 11, 12) geeignet ist, dass das Tier im Wesentlichen parallel zu der Längsrichtung der Box (10, 11, 12) ausgerichtet ist, und jeweils einen stangenförmigen Schenkel (15A, 15B, 15C, 16A, A6B, 16C) aufweist, der in Richtung auf die kurze Rückseite gebogen ist,
wobei vom Eingang her gesehen eine linke seitliche Trennwand (14) den linken Schenkel (15A, 15B, 15C) der Box (10, 11, 12) und den neben dem linken liegenden rechten Schenkel (16A, 16B, 16C) einer zweiten Box (10, 11, 12) aufweist,
wobei die zwei Schenkel (15A, 15B, 15C, 16A, 16B, 16C) als ein einziges, gebogenes, stangenförmiges Element (14) konzipiert sind,
**dadurch gekennzeichnet, dass** eine gesamte seitliche Trennwand frei in vertikaler Richtung um eine horizontale Achse bewegt werden kann.

2. Box (10, 11, 12) nach Anspruch 1,
**dadurch gekennzeichnet, dass** das Profil zum Ausrichten des Tiers in einer stehenden Position in der Box (10, 11, 12) geeignet ist.

3. Box (10, 11, 12) nach einem der vorhergehenden Ansprüche,
**dadurch gekennzeichnet, dass** das Profil zum Ausrichten des Tiers in einer liegenden Position in der Box (10, 11, 12) geeignet ist.

4. Box (10, 11, 12) nach einem der vorhergehenden Ansprüche,
**dadurch gekennzeichnet, dass** sich das Profil zumindest teilweise in Richtung auf die kurze Rückseite und in Richtung der mittleren Längsebene (L) der Box (10, 11, 12) erstreckt.

5. Box (10, 11, 12) nach einem der vorhergehenden Ansprüche,
**dadurch gekennzeichnet, dass** die mittlere Längsebene (L) der Box (10, 11, 12) die Symmetrieebene der Box (10, 11, 12) ist.

6. Box (10, 11, 12) nach einem der vorhergehenden Ansprüche,
**dadurch gekennzeichnet, dass** das Profil in Draufsicht mindestens teilweise den Konturen des Tiers folgt.

7. Box (10, 11, 12) nach einem der vorhergehenden Ansprüche,
**dadurch gekennzeichnet, dass** eine seitliche Trennwand (14) die Rückwand aufweist.

8. Box (10, 11, 12) nach einem der vorhergehenden Ansprüche,
**dadurch gekennzeichnet, dass** in Draufsicht die Ebene, die sich zwischen den zwei Schenkeln (15A, 15B, 15C, 16A, 16B, 16C) und angrenzend an die Vorderseite erstreckt, geschlossen ist oder Öffnungen aufweist, die kleiner sind als der Beindurchmesser des Tiers, für das die Box (10, 11, 12) bestimmt ist.

9. Box (10, 11, 12) nach einem der vorhergehenden Ansprüche,
**dadurch gekennzeichnet, dass** die Box (10, 11, 12) zum Befestigen einer seitlichen Trennwand (13G, 13H) an dem Tragelement (5) ein Scharnier (25) und einen Anschlag (26) aufweist, um eine Abwärtsdrehung der Trennwand (13G, 13H) zu verhindern.

10. Box (10, 11, 12) nach einem der vorhergehenden Ansprüche,
**dadurch gekennzeichnet, dass** die Box (10, 11, 12) zum Befestigen einer seitlichen Trennwand (13E, 13F) an dem Tragelement (8) eine Blattfeder (24) mit einem horizontal ausgerichteten Blatt aufweist.

11. Box (10, 11, 12) nach einem der vorhergehenden Ansprüche,
**dadurch gekennzeichnet, dass** die Box (11) zum Befestigen einer seitlichen Trennwand (13B) an dem Tragelement (5) eine Spiralfeder (17) mit mindestens einer Spirale in der vertikalen Ebene aufweist.

12. Box (10, 11, 12) nach einem der vorhergehenden Ansprüche,
**dadurch gekennzeichnet, dass** die Box (10, 11, 12) zum Befestigen einer seitlichen Trennwand (13I) an dem Tragelement (28) eine Gummitorsionsfeder aufweist.

13. Box (10, 11, 12) nach einem der vorhergehenden Ansprüche,
**dadurch gekennzeichnet, dass** das Profil eine Schulterbegrenzung zum Einschränken der Bewegung der Schulter oder des Halses des Tiers in einer normalen Ruheposition des Tiers in der Box (10, 11, 12) aufweist.

14. Box (10, 11, 12) nach einem der vorhergehenden Ansprüche,
**dadurch gekennzeichnet, dass** der freie Raum zwischen den zwei Schenkeln (15A, 15B, 15C, 16B, 16C, 16D) zwischen 80 cm und 100 cm beträgt.

15. Box (10, 11, 12) nach einem der vorhergehenden Ansprüche,
**dadurch gekennzeichnet, dass** die Rückwand einen Puffer (20, 21, 22) aufweist, der auf dem Boden der Box (10, 11, 12) befestigt ist, um die Bewegung der Brust eines liegenden Tiers in Richtung auf die kurze Rückseite zu verhindern.

16. Boxenstruktur mit einer Box (10, 11, 12) nach einem der vorhergehenden Ansprüche,
**dadurch gekennzeichnet, dass** das Tragelement ein horizontales Rohr (5) aufweist, das sich entlang mehrerer Boxen (10, 11, 12) erstreckt.

17. Stall mit einer Box (10, 11, 12) oder einer Boxenstruktur nach einem der vorhergehenden Ansprüche.

18. Trennwand nach einem der Ansprüche 1 bis 15 für den Gebrauch in einer Box (10, 11, 12) nach einem der Ansprüche 1 bis 15.

## Revendications

1. Box (10, 11, 12) pour un animal, en particulier un animal bovin, avec un côté avant court formant l'entrée au box (10, 11, 12) pour l'animal, avec deux cloisons latérales s'étendant sur les deux longs côtés du box (10, 11, 12), avec une cloison arrière pour limiter le mouvement de l'animal dans la direction du côté arrière court du box (10, 11, 12), et avec un élément de support pour fixer les cloisons latérales,
dans lequel les deux cloisons latérales (14) comprennent un profil qui est approprié pour positionner l'animal dans le box (10, 11, 12) de manière telle que l'animal soit orienté de façon sensiblement parallèle à la direction longitudinale du box (10, 11, 12), et chacune comprennent un pied en forme de barre (15A, 15B, 15C, 16A, 16B, 16C) qui est cintré dans la direction du côté arrière court,
dans lequel, vu de l'entrée, une cloison latérale gauche comprend le pied gauche (15A, 15B, 15C) du box (10, 11, 12) et le pied droit (16A, 16B, 16C) d'un second box (10, 11, 12) qui est adjacent sur la gauche,
les deux pieds (15A, 15B, 15C, 16A, 16B, 16C) étant conçus sous forme d'élément cintré unique en forme de barre (14), **caractérisé en ce que**
une cloison latérale entière (14) est capable de se déplacer librement dans une direction verticale autour d'un axe horizontal.

2. Box (10, 11, 12) selon l'une quelconque des revendications précédentes, **caractérisé en ce que** le profil est approprié pour orienter l'animal dans une position debout dans le box (10, 11, 12).

3. Box (10, 11, 12) selon l'une quelconque des revendications précédentes, **caractérisé en ce que** le profil est approprié pour orienter l'animal dans une position couchée dans le box (10, 11, 12).

4. Box (10, 11, 12) selon l'une quelconque des revendications précédentes, **caractérisé en ce que** le profil s'étend au moins partiellement dans la direction du côté arrière court et dans la direction du plan central longitudinal (L) du box (10, 11, 12).

5. Box (10, 11, 12) selon l'une quelconque des revendications précédentes, **caractérisé en ce que** le plan central longitudinal (L) du box (10, 11, 12) est le plan de symétrie du box (10, 11, 12).

6. Box (10, 11, 12) selon l'une quelconque des revendications précédentes, **caractérisé en ce que,** en vue en plan, le profil suit au moins partiellement les contours de l'animal.

7. Box (10, 11, 12) selon l'une quelconque des revendications précédentes, **caractérisé en ce qu'**une cloison latérale (14) comprend la cloison arrière.

8. Box (10, 11, 12) selon l'une quelconque revendication précédente, **caractérisé en ce que,** en vue en plan, le plan s'étendant entre les deux pieds (15A, 15B, 15C, 16A, 16B, 16C) et contigu au côté avant est fermé ou comprend des ouvertures qui sont plus petites que le diamètre de patte de l'animal pour lequel le box (10, 11, 12) est prévu.

9. Box (10, 11, 12) selon l'une quelconque des revendications précédentes, **caractérisé en ce que,** pour fixer une cloison latérale (13G, 13H) à l'élément de support (5), le box (10, 11, 12) comprend une articulation (25) et une butée (26) pour empêcher la rotation de la cloison (13G, 13H) vers le bas.

10. Box (10, 11, 12) selon l'une quelconque des revendications précédentes, **caractérisé en ce que,** pour fixer une cloison latérale (13E, 13F) à l'élément de support (8), le box (10, 11, 12) comprend un ressort à lames (24) avec une lame orientée horizontalement.

11. Box (10, 11, 12) selon l'une quelconque des revendications précédentes, **caractérisé en ce que,** pour fixer une cloison latérale (13B) à l'élément de support (5), le box (11) comprend un ressort à enroulement (17) possédant au moins un enroulement dans le plan vertical.

12. Box (10, 11, 12) selon l'une quelconque des revendications précédentes, **caractérisé en ce que,** pour fixer une cloison latérale (131) à l'élément de support (28), le box (10, 11, 12) comprend un ressort de torsion en caoutchouc.

13. Box (10, 11, 12) selon l'une quelconque des revendications précédentes, **caractérisé en ce que** le profil comprend une délimitation d'épaule pour limiter le mouvement de l'épaule ou du cou de l'animal dans une position normale de repos de l'animal dans le box (10, 11, 12).

14. Box (10, 11, 12) selon l'une quelconque des revendications précédentes, **caractérisé en ce que** l'espace libre entre les deux pieds (15A, 15B, 15C, 16B, 16C, 16D) est compris entre 80 cm et 100 cm.

15. Box (10, 11, 12) selon l'une quelconque des revendications précédentes, **caractérisé en ce que** la cloison arrière comprend un butoir (20, 21, 22) qui est fixé sur le sol du box (10, 11, 12) dans le but d'empêcher le mouvement de la poitrine d'un animal couché dans la direction du côté arrière court.

16. Box construction avec un box (10, 11, 12) selon l'une quelconque des revendications précédentes, **caractérisé en ce que** l'élément de support comprend un tube horizontal (5) qui s'étend le long de plusieurs boxes (10, 11, 12).

17. Écurie avec un box (10, 11, 12) ou une construction de box selon l'une quelconque des revendications précédentes.

18. Cloison selon l'une quelconque des revendications 1 à 15 destinée à être utilisée dans un box (10, 11, 12) selon l'une quelconque des revendications 1 à 15.
